# EUROPÄISCHE PATENTANMELDUNG

(11) **EP 4 667 205 A1**
(43) Veröffentlichungstag der Anmeldung: **24.12.2025**
(21) Anmeldenummer: 25178559.8
(22) Anmeldetag: 23.05.2025
(51) Int. Cl.: B29D 30/06, B24B 5/36, B25J 11/00, B26D 1/44, B26D 3/00, B26D 3/28

(54) **REIFENROHLINGENTGRATVORRICHTUNG, VORZUGSWEISE ROBOTER ZUM ENTGRATEN EINES REIFENROHLINGS**

(30) Priorität: 17.06.2024 DE 102024205577
(71) Anmelder: Continental Reifen Deutschland GmbH, 30175 Hannover (DE)
(72) Erfinder: Moreira, Artur, 4760-606 Lousado (PT); Sousa, Bruno, 4760-606 Lousado (PT)
(74) Vertreter: Continental Corporation

(57) **Zusammenfassung**

Die vorliegende Erfindung betrifft eine Reifenrohlingentgratvorrichtung (1), vorzugsweise einen Roboter (1) zum Entgraten eines Reifenrohlings, welche ausgebildet ist, ein Entgratwerkzeug (12) gegenüber einem Reifenrohling kraftgeregelt zu führen, um den Reifenrohling selbsttätig zu entgraten, mit einem Drehmomentsensor (10), welcher das Entgratwerkzeug (12) mit einem Antrieb der Reifenrohlingentgratvorrichtung (1) kraftübertragend verbindet. Die Reifenrohlingentgratvorrichtung (1) ist gekennzeichnet durch eine Werkzeughalterung (11), welche mit dem Drehmomentsensor (10) verbunden ist und gegenüberliegend ausgebildet ist, das Entgratwerkzeug (12) aufzunehmen, wobei das Entgratwerkzeug (12) eine manuelle Klinge (12) ist.

## Beschreibung

Die vorliegende Erfindung betrifft eine Reifenrohlingentgratvorrichtung, vorzugsweise einen Roboter zum Entgraten eines Reifenrohlings.

Es ist bekannt, verschiedene Arten von Fahrzeugen auf Rädern zu bewegen bzw. mittels Räder auf einem Untergrund abrollen zu lassen. Dies erfolgt heutzutage üblicherweise mit Reifen, welche am Umfang des Rades sitzen und die Kräfte zwischen Rad und Untergrund wie beispielsweise einer Fahrbahn übertragen.

Derjenige Teil des Reifens des Fahrzeugs, d.h. des Fahrzeugreifens, welcher Kontakt zum Untergrund hat, wird üblicherweise als Reifenaufstandsfläche bezeichnet, dessen Lauffläche sich um den Reifen herumerstreckt. In der Querrichtung schließt sich beidseitig der Lauffläche jeweils eine Seitenwand an, welche der Lauffläche abgewandt mit einem Wulst endet, welcher der festen Verbindung mit der Felge dient. Die Lauffläche weist nach radial außen üblicherweise ein Profil auf, welches der Verbesserung der Verbindung mit dem Untergrund und insbesondere mit der Fahrbahn dient. Radial unterhalb der Lauffläche liegt die Karkasse als Festigkeitsträger, welche den tragenden Unterbau des Reifens darstellt. Die Seiten der Karkasse erstrecken sich bis zum Wulst und stehen so kraftübertragend mit der Felge in Verbindung.

Zur Herstellung von Reifen werden üblicherweise Vulkanisierformen verwendet, welche unter anderem aus Formteilen bestehen, welche gemeinsam die radial äußere Oberfläche des Reifens wie den Laufstreifen sowie die übrigen äußeren Flächen des Reifens wie den Schulterbereich, die Seitenwände und den Wulstbereich formen. Die Segmente der Vulkanisierform, welche den Laufstreifen des Reifens formen, werden Profil- oder Formsegmente genannt.

Der unvulkanisierte "grüne" Reifenrohling wird in der Vulkanisierform vulkanisiert und durch Kautschukvernetzungsreaktionen in seinen endgültigen gummielastischen Zustand überführt. Dabei erhält der Reifen seine Profilgestaltung durch die entsprechende Negativgestaltung der Formflächen der Formsegmente. Unter Formflächen sind diejenigen Flächen der Formsegmente gemeint, welche dem Reifenrohling seine entsprechende Gestaltung geben.

Zur Definition bzw. zur Verbesserung des Kontakts zwischen dem Reifen und dem Untergrund ist die Lauffläche des Reifens üblicherweise profiliert ausgebildet, d.h. der Reifen weist radial nach außen zum Untergrund hin eine profilierte Lauffläche auf. Die profilierte Lauffläche besteht üblicherweise aus einer bestimmten Anordnung von Blöcken, die durch Rillen getrennt sind.

In der Produktion werden die unvulkanisierten "grünen" Reifenrohlinge aus unvulkanisiertem elastomeren Material geformt und anschließend vulkanisiert, wie bereits erwähnt. Die Laufflächen können dabei separat extrudiert und anschließend auf die Karkasse aufgelegt und dort vulkanisiert werden. Zuvor sind jedoch Grate als Rückstände des Ausformens, insbesondere der Laufflächen, durch Entgraten zu entfernen, da dies beim unvulkanisierten Material des "grünen" Reifenrohlings einfach, schneller und rückstandsfreier möglich ist als beim vulkanisierten Reifen.

Das Entgraten des "grünen" Reifenrohlings, d.h. das Entfernen der unerwünschten Grate, bzw. dessen Lauffläche erfolgt bisher manuell, indem entsprechende Klingen von einer Person entlang der Oberfläche des "grünen" Reifenrohlings geführt werden, um die Grate zu entfernen, d.h. um die Grate abzuschneiden.

Eine Aufgabe der vorliegenden Erfindung ist es, die Möglichkeiten zum Entgraten von "grünen" Reifenrohlingen, insbesondere von Laufflächen, der eingangs beschriebenen Art zu verbessern. Zumindest soll eine Alternative zu den bekannten Möglichkeiten zum Entgraten von "grünen" Reifenrohlingen, insbesondere von Laufflächen, geschaffen werden.

Die Aufgabe wird erfindungsgemäß durch eine Reifenrohlingentgratvorrichtung mit den Merkmalen gemäß Patentanspruch 1 gelöst.

Somit betrifft die vorliegende Erfindung eine Reifenrohlingentgratvorrichtung, auch Trimmvorrichtung genannt, vorzugsweise einen Roboter zum Entgraten eines Reifenrohlings, welche ausgebildet ist, ein Entgratwerkzeug gegenüber einem Reifenrohling kraftgeregelt zu führen, um den Reifenrohling selbsttätig zu entgraten, mit einem Drehmomentsensor, welcher das Entgratwerkzeug mit einem Antrieb der Reifenrohlingentgratvorrichtung kraftübertragend verbindet.

Die erfindungsgemäße Reifenrohlingentgratvorrichtung ist gekennzeichnet durch eine Werkzeughalterung, welche mit dem Drehmomentsensor verbunden ist und gegenüberliegend ausgebildet ist, das Entgratwerkzeug aufzunehmen, wobei das Entgratwerkzeug eine manuelle Klinge ist.

Erfindungsgemäß kann somit die Verwendung einer bekannten Klinge zum manuellen Schneiden bzw. Entgraten, insbesondere von Laufflächen, im automatischen Prozess verwendet werden. Die Werkzeughalterung kann entsprechend, vorzugsweise als Roboterwerkzeug, die gleiche Klinge wie beim vorherigen manuellen Prozess aufnehmen und diese manuelle Klinge selbsttätig kraftgeregelt zum Entgraten führen.

Vorzugsweise lässt sich auf diese Art und Weise mittels eines maßgeschneiderten Werkzeugs die Empfindlichkeit des am Roboterarm installierten Drehmomentsensors maximieren. Auch kann die Möglichkeit geschaffen werden, für jede Reifengröße die gleiche manuelle Klinge zu verwenden.

Die manuelle Klinge kann somit manuell oder alternativ für den automatischen Prozess der Entfernung von Wulstgraten in der automatischen Trimmmaschine verwendet werden, insbesondere von Laufflächen.

Mehrere Ausführungsbeispiele und weitere Vorteile der Erfindung werden nachstehend im Zusammenhang mit den folgenden Figuren erläutert. Darin zeigt:
- Fig. 1: eine perspektivische schematische Darstellung einer erfindungsgemäßen Reifenrohlingentgratvorrichtung gemäß eines ersten Ausführungsbeispiels von schräg unten;
- Fig. 2: eine perspektivische schematische Darstellung der erfindungsgemäßen Reifenrohlingentgratvorrichtung gemäß des ersten Ausführungsbeispiels von unten; und
- Fig. 3: eine perspektivische schematische Darstellung einer erfindungsgemäßen Reifenrohlingentgratvorrichtung gemäß eines zweiten Ausführungsbeispiels von schräg unten.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z, welche der Richtung der Schwerkraft entspricht. Die Längsrichtung X kann auch als Tiefe X, die Querrichtung Y auch als Breite Y und die vertikale Richtung Z auch als Höhe Z bezeichnet werden. Die Längsrichtung X und die Querrichtung Y bilden gemeinsam die Horizontale X, Y, welche auch als horizontale Ebene X, Y bezeichnet werden kann. Die Längsrichtung X, die Querrichtung Y und die vertikale Richtung Z können gemeinsam auch als Raumrichtungen X, Y, Z bzw. als kartesische Raumrichtungen X, Y, Z bezeichnet werden.

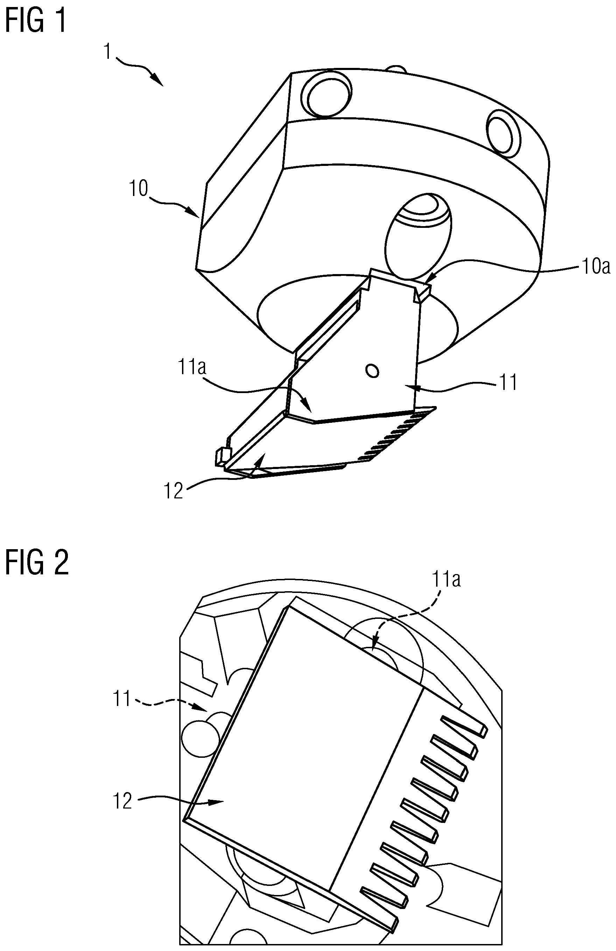

Fig. 1 zeigt eine perspektivische schematische Darstellung einer erfindungsgemäßen Reifenrohlingentgratvorrichtung 1 gemäß eines ersten Ausführungsbeispiels von schräg unten. Fig. 2 zeigt eine perspektivische schematische Darstellung der erfindungsgemäßen Reifenrohlingentgratvorrichtung 1 gemäß des ersten Ausführungsbeispiels von unten.

Die erfindungsgemäße Reifenrohlingentgratvorrichtung 1 wird mittels eines Roboters 1 zum Entgraten eines Reifenrohlings (nicht dargestellt) realisiert. Der Roboter 1 bzw. dessen Roboterarm (nicht dargestellt) ist ausgebildet, ein Entgratwerkzeug 12 gegenüber einem Reifenrohling kraftgeregelt zu führen, um den Reifenrohling selbsttätig zu entgraten. Hierzu weist der Roboter 1 bzw. dessen Endeffektor (nicht dargestellt) einen Drehmomentsensor 10 auf, welcher das Entgratwerkzeug 12 mit einem Antrieb bzw. dem Endeffektor des Roboters 1 kraftübertragend verbindet.

Erfindungsgemäß ist eine Werkzeughalterung 11 vorgesehen, welche mit dem Drehmomentsensor 10 verbunden ist und gegenüberliegend ausgebildet ist, das Entgratwerkzeug 12 aufzunehmen. Das Entgratwerkzeug 12 ist eine manuelle Klinge 12, welche somit auch für einen automatischen bzw. selbsttätigen kraftgeregelten Entgratprozess, insbesondere einer Lauffläche, mittels des Roboters 1 verwendet werden kann.

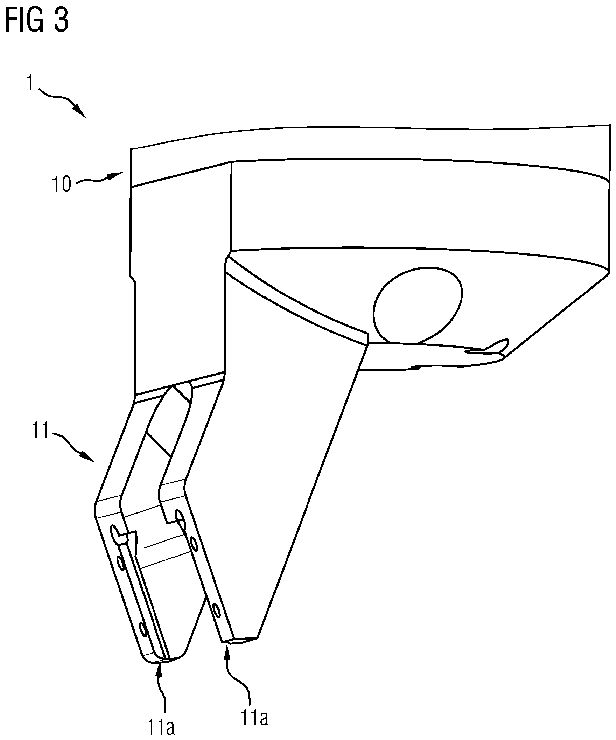

Fig. 3 zeigt eine perspektivische schematische Darstellung einer erfindungsgemäßen Reifenrohlingentgratvorrichtung 1 gemäß eines zweiten Ausführungsbeispiels von schräg unten. Das Entgratwerkzeug 12 ist nicht dargestellt.

In diesem Fall ist die Werkzeugaufnahme 11a nach schräg unten, etwa in einem Winkel von 45°, ausgerichtet.

### Bezugszeichenliste (Teil der Beschreibung)

- X: Längsrichtung; Tiefe
- Y: Querrichtung; Breite
- Z: vertikale Richtung; Höhe
- X, Y: Horizontalen; horizontale Ebene

- 1: Reifenrohlingentgratvorrichtung; Trimmmaschine; Roboter zum Entgraten eines Reifenrohlings
- 10: Drehmomentsensor
- 10a: Halterungsaufnahme des Drehmomentsensors
- 11: Werkzeughalterung; Klingenhalterung; Klingenadapter
- 11a: Werkzeugaufnahme; Klingenaufnahme
- 12: Entgratwerkzeug; manuelle Klinge

## Patentansprüche

1. Reifenrohlingentgratvorrichtung (1), vorzugsweise Roboter (1) zum Entgraten eines Reifenrohlings,
welche ausgebildet ist, ein Entgratwerkzeug (12) gegenüber einem Reifenrohling kraftgeregelt zu führen, um den Reifenrohling selbsttätig zu entgraten,
mit einem Drehmomentsensor (10), welcher das Entgratwerkzeug (12) mit einem Antrieb der Reifenrohlingentgratvorrichtung (1) kraftübertragend verbindet,
**gekennzeichnet durch**
eine Werkzeughalterung (11), welche mit dem Drehmomentsensor (10) verbunden ist und gegenüberliegend ausgebildet ist, das Entgratwerkzeug (12) aufzunehmen,
wobei das Entgratwerkzeug (12) eine manuelle Klinge (12) ist.
